(19) Europäisches Patentamt
European Patent Office
Office européen des brevets

(11) Veröffentlichungsnummer: **0 196 026**
**B1**

# (12) EUROPÄISCHE PATENTSCHRIFT

(45) Veröffentlichungstag der Patentschrift: **31.05.89**

(51) Int. Cl.⁴: **C 07 F 9/53,** C 07 F 9/30, C 07 F 9/65, A 01 N 57/18

(21) Anmeldenummer: **86103889.1**

(22) Anmeldetag: **21.03.86**

## (54) Phosphorhaltige funktionelle Essigsäurederivate, Verfahren zu ihrer Herstellung und sie enthaltende herbizide, wachstumsregulierende Mittel.

(30) Priorität: **28.03.85 DE 3511198**

(43) Veröffentlichungstag der Anmeldung: **01.10.86 Patentblatt 86/40**

(45) Bekanntmachung des Hinweises auf die Patenterteilung: **31.05.89 Patentblatt 89/22**

(84) Benannte Vertragsstaaten: **CH DE FR GB IT LI**

(56) Entgegenhaltungen:
**DE-A-2 111 672**
**DE-A-3 238 958**
**JP-A-54 089 027**

(73) Patentinhaber: **HOECHST AKTIENGESELLSCHAFT, Postfach 80 03 20, D-6230 Frankfurt am Main 80 (DE)**

(72) Erfinder: **Löher, Heinz Josef, Dr., Geisenheimer Strasse 88, D-6000 Frankfurt am Main 71 (DE)**
Erfinder: **Bauer, Klaus, Dr., Kolpingstrasse 7, D-6054 Rodgau (DE)**
Erfinder: **Bieringer, Hermann, Dr., Eichenweg 26, D-6239 Eppstein/Taunus (DE)**

EP 0 196 026 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

In der japanischen Anmeldung 54.089 027 wird das Phosphonoglycin der Formel $(HO)_2P(O)CH(NH_2)COOH$ als Verbindung mit herbiziden Eigenschaften beschrieben. Ferner sind aus der DE-OS-3 238 958 zahlreiche Derivate der Dimethylphosphinoylhydroxyessigsäure $(CH_3)_2P(O)CH(OH)COOH$ und verwandter Verbindungen bekannt.

Es wurde nun gefunden, daß zahlreiche weitere phosphorhaltige funktionelle Derivate der Essigsäure eine ausgezeichnete herbizide und wachstumsregulierende Wirkung besitzen.

Gegenstand der Erfindung sind daher Verbindungen der allgemeinen Formel I

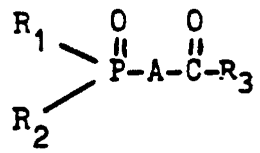
I

worin

$R_1$ und $R_2$ unabhängig voneinander $(C_1$-$C_4)$-Alkyl, OH, $CF_3$ oder Cyanethyl,

A die Gruppen -CO-, -CHOH, $-CHOR_6$, $-CHOCONR_7R_8$, $-CHNHR_9$, oder $-CHOCOR_{10}$,

$R_3$ $XCR_{11}R_{12}CXR_{13}$, $-X(C_{13}$-$C_{18})$-Alkyl, $-X(C_1$-$C_{17})$-Alkylcarbonyl-$(C_1$-$C_{17})$-alkyl, Nitrobenzyloxy, einen Rest der Formel

-X-$(C_1$-$C_{17})$-alkylen-CO-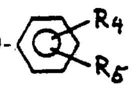

sowie, falls A = $-CHOCOR_{10}$, auch -OH, -SH;

$(C_1$-$C_{12})$-Alkoxy, $(C_3$-$C_8)$-Cycloalkoxy, $(C_3$-$C_6)$-Alkenyloxy, $(C_3$-$C_6)$-Alkinyloxy, Phenoxy oder Benzyloxy, wobei die genannten Gruppen ihrerseits durch OH, Halogen, $CF_3$, $(C_1$-$C_4)$-Alkyl oder $(C_1$-$C_4)$-Alkoxy substituiert sein können;

$(C_1$-$C_6)$-Alkylthio, $(C_3$-$C_8)$-Cycloalkylthio, $(C_3$-$C_6)$-Alkenylthio, $(C_3$-$C_6)$-Alkinylthio, Phenylthio oder Benzylthio, wobei die genannten Gruppen ihrerseits durch Halogen, $CF_3$, $(C_1$-$C_4)$-Alkyl oder $(C_1$-$C_4)$-Alkoxy substituiert sein können;

Amino, Hydroxylamino;

$(C_1$-$C_4)$-Alkylamino, O-$(C_1$-$C_4)$-Alkylhydroxylamino, Di-$(C_1$-$C_4)$-alkylamino, Anilino, Phenyl-$(C_1$-$C_4)$-alkylamin Diphenyl-$(C_1$-$C_4)$-alkylamino, N-Phenyl-N-$(C_1$-$C_4)$-alkylamino, N-Phenyl-N-$(C_3$-$C_6)$-alkenylamino oder N-Phenyl-N-$(C_3$-$C_6)$-alkinylamino, wobei die genannten Gruppen ihrerseits durch OH, Halogen, $(C_1$-$C_4)$-Alkyl oder $(C_1$-$C_4)$-Alkoxy substituiert sein können;

Hydrazino, β-$(C_1$-$C_4)$-Alkylhydrazino, β,β-Di-$(C_1$-$C_4)$-alkylhydrazino, Piperidino, Pyrrolidino, Morpholino, 2,6-Dimethylmorpholino oder einen Rest der Formel

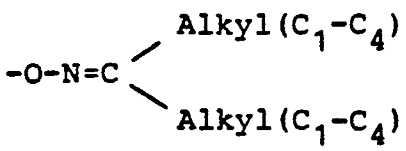 oder 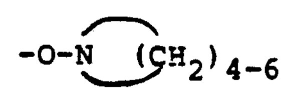

$R_4$ H, OH, SH, Halogen, $(C_1$-$C_4)$-Alkyl, $(C_1$-$C_4)$-Alkoxy, Allyloxy, Proparglyoxy, Phenoxy, Benzyloxy, Formyl, $CF_3$, $NO_2$, Di-$(C_1$-$C_4)$-alkoxymethyl, Di-$(C_1$-$C_4)$-alkylthiomethyl oder $(C_1$-$C_4)$-Alkoxycarbonyl,

$R_5$ H, Halogen, $(C_1$-$C_4)$-Alkoxy oder $NO_2$,

$R_6$ $(C_1$-$C_{12})$ Alkyl, Benzyl, Phenyl, Halogenbenzyl, Halogenphenyl, Allyl, Propargyl, $CF_3$ oder Tetrahydropyranyl,

$R_7$, $R_8$ unabhängig voneinander H, $(C_1$-$C_{12})$-Alkyl, $(C_3$-$C_8)$-Cycloalkyl, $(C_3$-$C_6)$-Alkenyl, $(C_3$-$C_6)$-Alkinyl, Phenyl, Benzyl, Benzoyl, Phenoxysulfonyl, $(C_1$-$C_{12})$-Alkylsulfonyl, $(C_3$-$C_6)$-Alkenylsulfonyl oder Phenylsulfonyl, wobei die genannten Gruppen ihrerseits durch Halogen, $CF_3$, CN, $(C_1$-$C_4)$-Alkoxy oder $(C_1$-$C_4)$-Alkoxycarbonyl substituiert sein können,

$R_9$ $(C_1$-$C_6)$-Alkyl, $(C_3$-$C_6)$-Alkenyl, $(C_3$-$C_6)$-Alkinyl, $(C_1$-$C_4)$-Acyl, Halogen-$(C_1$-$C_4)$-acyl oder Benzoyl,

$R_{10}$ $(C_1$-$C_{18})$-Alkyl, $(C_3$-$C_6)$-Cycloalkyl, Allyl, Propargyl, Phenyl, Benzyl, Mono- oder Dihalogenbenzyl,

$R_{11}$, $R_{12}$ unabhängig voneinander H, $(C_1$-$C_4)$-Alkyl, $(C_1$-$C_4)$-Alkoxy, Phenyl oder Benzyl,

$R_{13}$ OH, SH;

$(C_1$-$C_{18})$-Alkoxy, $(C_3$-$C_8)$-Cycloalkoxy, $(C_3$-$C_{18})$-Alkenyloxy, $(C_3$-$C_6)$-Alkinyloxy, Phenoxy oder Benzyloxy, wobei die genannten Gruppen ihrerseits durch OH, Halogen, $CF_3$, $NO_2$, $(C_1$-$C_4)$-Alkyl, $(C_1$-$C_4)$-Alkoxy oder Phenyloxy substituiert sein können;

$(C_1$-$C_4)$-Alkoxycarbonyl-$(C_1$-$C_4)$-alkoxy, $(C_1$-$C_4)$-Alkoxycarbonyl-benzyloxy, Benzyloxycarbonyl-benzyloxy;

Methylthio-$(C_1$-$C_4)$-alkyl, Methylsulfinyl-$(C_1$-$C_4)$-alkyl, Methylsulfonyl-$(C_1$-$C_4)$-alkyl; $(C_1$-$C_{18})$-Alkylthio, $(C_3$-$C_8)$-Cycloalkylthio, $(C_3$-$C_{18})$-Alkenylthio, $(C_3$-$C_6)$-Alkinylthio, Phenylthio oder Benzylthio, wobei die genannten Gruppen ihrerseits durch Halogen, $CF_3$, $(C_1$-$C_4)$-Alkyl oder $(C_1$-$C_4)$-Alkoxy substituiert sein können;

Amino, Hydroxylamino;

$(C_1$-$C_{12})$-Alkylamino, O-$(C_1$-$C_4)$-Alkylhydroxylamino, Di-$(C_1$-$C_{10})$-Alkylamino, Anilino, Phenyl-$(C_1$-$C_4)$-

alkylamino Diphenyl-($C_1$-$C_4$)-alkylamino, N-Phenyl-N-($C_1$-$C_4$)-alkylamino, N-Phenyl-N-($C_3$-$C_6$)-alkenylamino oder N-Phenyl-N-($C_3$-$C_6$)-alkinylamino, wobei die genannten Gruppen ihrerseits durch OH, Halogen, ($C_1$-$C_4$)-Alkyl oder ($C_1$-$C_4$)-Alkoxy substituiert sein können;

Hydrazino, β-($C_1$-$C_4$)-Alkyl-hydrazino, β,β-Di-($C_1$-$C_4$)-alkylhydraino, Piperidino, Pyrrolidino, Morpholino, 2,6-Dimethylmorpholino oder einen Rest der Formel

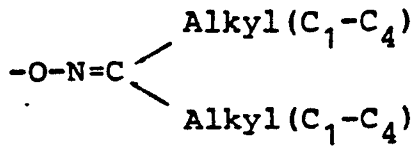

sowie

X O oder S bedeuten

sowie deren Salze mit Basen oder Säuren.

Im vorstehenden bedeutet "Hal" bzw. "Halogen" vorzugsweise Chlor oder Brom. Die für $R_{13}$ genannten aliphatischen Gruppen sind, sofern sie substituiert sind, vorzugsweise einmal durch Hydroxy, ($C_1$-$C_4$)-Alkoxy oder Halogen, insbesondere Chlor substituiert. Die aromatischen Gruppen können ein- bis dreimal substituiert sein, vorzugsweise durch Halogen, insbesondere durch Chlor, $CF_3$, ($C_1$-$C_2$)-Alkyl oder ($C_1$-$C_2$)-Alkoxy.

Falls einer der Reste $R_1$, $R_2$ bzw. $R_{13}$ -OH oder falls $R_{13}$ -SH bedeutet, sind die Verbindungen der Formel I auch zur Salzbildung mit anorganischen und organischen Basen befähigt. Als Basenkationen kommen z. B. $Na^+$, $K^+$, $NH_4^+$, $Ca^{2+}$, $Mg^{2+}$, $Zn^{2+}$, $Cu^{2+}$, $Fe^{+2}$, $Ni^{2+}$, ($C_1$-$C_4$)-Alkyl-$NH_3^+$, Di-($C_1$-$C_4$)-alkyl-$NH_2^+$, Tri-($C_1$-$C_4$)-alkyl-$NH^+$, oder $(HOCH_2CH_2)_3NH^+$ in Betracht.

Verbindungen der allgemeinen Formel I, welche in den Resten A und $R_3$ eines oder mehrere asymmetrische Kohlenstoffatome enthalten, oder einen asymmetrischen Phosphor enthalten, liegen in enantiomeren oder diastereomeren Formen vor. Im allgemeinen werden die entsprechenden erfindungsgemäßen Verbindungen als Racemate oder als Diastereomerengemische erhalten. Falls erwünscht, können die üblichen Techniken zur Trennung dieser Gemische in die sterisch einheitlichen Bestandteile angewendet werden. Auch durch Verwendung von sterisch einheitlichen Ausgangsmaterialien ist eine Reindarstellung der optischen Isomeren möglich.

Bevorzugt sind Verbindungen, in denen $R_1$ und $R_2$ $CH_3$ oder auch $C_2H_5$; A = CHOH oder $CHOCOR_{10}$ und $R_3$ = $OCH_2COR_{13}$, $-OCH(CH_3)COR_{13}$ oder Nitrobenzyloxy bedeuten und $R_{13}$ die angegebenen Bedeutungen hat.

Besonders bevorzugt sind Verbindungen mit $R^1$ und $R^2$ = $CH_3$, A = CHOH, $R_3$ = $OCH_2COR_{13}$, $OCH(CH_3)COR_{13}$ oder Nitrobenzyloxy und $R_{13}$ = ($C_1$-$C_{18}$)-Alkoxy, Allyloxy, Propinyloxy, ($C_1$-$C_4$)-Halogenalkoxy ($C_1$-$C_4$)-Alkoxycarbonyl-($C_1$-$C_4$)-alkoxy, Benzyloxy, ($C_1$-$C_4$)-Alkoxycarbonyl-benzyloxy, Benzyloxycarbonylbenzyloxy, ($C_1$-$C_4$)-Alkylthio, ($C_1$-$C_4$)-Alkylamino, Anilino, Benzylamino.

Verbindungen der Formel I mit $R_3$ = $-XCR_{11}R_{12}CXR_{13}$ erhält man, indem man Verbindungen der allgemeinen Formel II

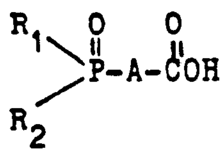

II

mit Halogen(thio)-carbonsäuren bzw. -estern der Formel III

$$HalCR_{11}R_{12}CXR_{13} \qquad III$$

oder Hydroxy(thio)-carbonsäure(estern) bzw. Mercapto(thio)-carbonsäure(estern) der Formel IV

$$HXCR_{11}R_{12}CXR_{13} \qquad IV$$

umsetzt.

Weitere Verbindungen I mit $R_3$= X-Alkyl, X-Alkylcarbonylalkyl, X-Phenylcarbonylalkyl oder Nitrobenzyloxy werden in analoger Weise wie die Verbindungen der DE-OS-3 238 958 hergestellt.

Die so erhaltenen Verbindungen der Formel I können ggf. durch Alkylierung, Halogenierung, Benzylierung, Oxidation, Acylierung, Aminierung oder Hydrierung in andere Verbindungen der Formel I umgewandelt werden. Ggf. in Position $R_{13}$ befindliche Alkoxygruppe können verseift. bzw. Säuren in ihre Salze überführt werden.

Die Umsetzungen können mit oder ohne Lösungsmittelzusatz bei Temperaturen von 20° - 100°C durchgeführt werden; als Lösungsmittel kommen ggf. inerte Solventien wie Dioxan, Tetrahydrofuran, Acetonitril, Dimethoxyethan, Dichlormethan Toluol oder Dimethylformamid in Frage.

In manchen Fällen ist es angebracht, die Umsetzung durch Zugabe von Basen zu beschleunigen. Als solche eignen sich Alkalihydroxide oder -alkoholate wie NaOH, KOH oder $NaOCH_3$, K-tert. butylat oder auch tertiäre Stickstoffbasen wie Triethylamin oder Methyldiisopropylamin; außerdem Fluoride wie KF, CsF oder NaF.

Die Ausgangsstoffe der Formeln II erhält man z. B. nach den in DE-OS-3 238 958 angegebenen Verfahren. Die

Ausgangsstoffe der Formeln III und IV sind literaturbekannt oder lassen sich nach literaturbekannten Verfahren herstellen.

Die erfindungsgemäßen Verbindungen besitzen eine ausgezeichnete und sehr breite herbizide Wirkung gegen ein breites Spektrum annueller sowie perennierender Ungräser und Unkräuter an Wegrändern, in Industrieanlagen oder Eisenbahnanlagen. Gegenstand der Erfindung sind daher auch herbizide Mittel, die die Verbindungen der Formel I enthalten, und deren Verwendung zur Bekämpfung von unerwünschtem Pflanzenwuchs.

Die Wirkstoffe eignen sich sowohl zur Anwendung in der Landwirtschaft als auch zur Unkrautbekämpfung. Ein Einsatz in ein- oder mehrjährigen landwirtschaftlichen Kulturen ist möglich, sofern durch die Art der Applikation und/oder das Alter der Kulturpflanzen sichergestellt wird, daß die Kulturpflanzen bzw. ihre empfindlichen grünen Teile keinen Schaden leiden. Beispiele für eine derartige Einsatzmöglichkeit sind Plantagen, Baumkulturen, Rebanlagen etc.

Da eine Anwendung der neuen Verbindungen in Nutzkulturen vor dem Auflaufen den Kulturpflanzen nur geringen oder keinen Schaden zufügt kann man sie gegen Unkräuter noch vor dem Auflaufen der Saat bzw. vor der Aussaat oder nach der Ernte anwenden.

Die erfindungsgemäßen Verbindungen sind aber auch gegen bei der Ernte störenden Pflanzenwuchs der Nutzpflanze (z. B. Baumwolle, Kartofrel) selbst einsetzbar.

In Abhängigkeit von der angewendeten Dosis sind mit den neuen Verbindungen auch typische wachstumsregulierende Effekte erzielbar; so können beispielsweise der Wuchs der Pflanzen, aber auch der Gehalt an erwünschten Pflanzeninhaltsstoffen beeinflußt werden. Damit eignen sich die Verbindungen als Wachstumsregulatoren in Nutzpflanzenkulturen wie z. B. Getreide, Mais, Zuckerrohr, Tabak, Reis und Sorghum. Andererseits lassen sich auch Pflanzenbestände regulieren, etwa Kulturrasen, oder auch Pflanzengemeinschaften an Wege- und Straßenrändern sowie Zierpflanzen.

Durch Anwendung der erfindungsgemäßen Verbindungen wird das vegetative Wachstum bei einer Vielzahl von mono- und dikotylen Pflanzen gehemmt und als Folge davon u.a. der Kohlehydratanteil in den Pflanzen oder deren Früchten erhöht. Die Folge davon ist vielfach eine positive Beeinflussung des Gehalts an erwünschten Pflanzeninhaltsstoffen wie Proteinen oder Kohlehydraten (Stärke, Zucker).

Beispielsweise wird bei Zuckerrohr und Zuckerrüben der Saccharosegehalt, bei Obst und Weintrauben der Fruchtzuckergehalt erhöht; bei anderen Pflanzen wie Kartoffeln, Mais, Hirse (Sorghum) und Grünfutter (Klee, Luzerne) nimmt der Stärkegehalt zu. Die damit erzielten Vorteile sind offenkundig und bedürfen keiner Erläuterung.

Die Anwendung erfolgt etwa eine Woche bis 5 Monate vor der Ernte. Nach Ablauf dieser Zeit hat der durch die Wirkstoffe hervorgerufene Reifungsgrad und damit auch der Kohlehydratgehalt ein Maximum erreicht. Allgemein ist zu beachten, daß bei den Kulturen die Wachstumsgeschwindigkeit und Vegetationsdauer innerhalb beträchtlicher Grenzen variieren kann. Zuckerrohr z. B. benötigt je nach Standort und Klima 1 - 3 Jahre bis zur Erntereife. Entsprechend muß auch der Anwendungszeitpunkt variiert werden. Bei Zuckerrohr kann dieser z. B. 1 bis 13 Wochen vor der Ernte liegen.

Die Mittel können als Spritzpulver, emulgierbare Konzentrate, versprühbare Lösungen, Stäubemittel, Beizmittel, Dispersionen, Granulate oder Mikrogranulate in den üblichen Zubereitungen angewendet werden.

Spritzpulver sind in Wasser gleichmäßig dispergierbare Präparate, die neben dem Wirkstoff außer gegebenenfalls einem Verdünnungs- oder Intertstoff noch Netzmittel, z. B. polyoxethylierte Fettalkohole, Alkyl- oder Alkylphenylsulfonate und Dispergiermittel, z. B. ligninsulfonsaures Natrium, 2,2'-dinaphthylmethan-6,6'-disulfonsaures Natrium, dibutylnaphthalinsulfonsaures Natrium oder auch oleoylmethyltaurinsaures Natrium enthalten. Die Herstellung erfolgt in üblicher Weise, z. B. durch Mahlen und Vermischen der Komponenten.

Emulgierbare Konzentrate können z. B. durch Auflösen des Wirkstoffes in einem inerten organischen Lösungsmittel, z. B. Butanol, Cyclohexanon, Dimethylformamid, Xylol oder auch höhersiedenden Aromaten oder Kohlenwasserstoffen unter Zusatz von einem oder mehreren Emulgatoren hergestellt werden. Bei flüssigen Wirkstoffen kann der Lösungsmittelanteil auch ganz oder teilweise entfallen. Als Emulgatoren können beispielsweise verwendet werden: Alkylarylsulfonsaure Calciumsalze wie Ca-dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte, Fettalkohol-Propylenoxid-Ethylenoxid-Kondensationsprodukte, Alkylpolyglykolether, Sorbitanfettsäureester, Polyoxethylensorbitanfettsäureester oder Polyoxethylensorbitester.

Sträubemittel kann man durch Vermahlen des Wirkstoffes mit fein verteilten, festen Stoffen, z. B. Talkum, natürlichen Tonen wie Kaolin, Bentonit, Pyrophillit oder Diatomeenerde erhalten.

Granulate können entweder durch Verdüsen des Wirkstoffes auf adsorptionsfähiges, granuliertes Inertmaterial hergestellt werden oder durch Aufbringen von Wirkstoffkonzentrationen mittels Bindemitteln, z. B. Polyvinylalkohol, polyacrylsaurem Natrium oder auch Mineralölen auf die Oberfläche von Trägerstoffen wie Sand, Kaolinite oder von granuliertem Inertmaterial. Auch können geeignete Wirkstoffe in der für die Herstellung von Düngemittelgranulaten üblichen Weise, gewünschtenfalls in Mischung mit Düngemitteln, granuliert werden.

In Spritzpulvern beträgt die Wirkstoffkonzentration z. B. etwa 10 bis 90 Gew.-% der Rest zu 100 Gew.-% besteht aus üblichen Formulierungsbestandteilen. Bei emulgierbaren Konzentraten kann die Wirkstoffkonzentration etwa 10 bis 80 Gew.-% betragen. Staubförmige Formulierungen enthalten meistens 5 bis 20 Gew.-% an Wirkstoff, versprühbare Lösungen etwa 2 bis 20 Gew.-%. Bei Granulaten hängt der

Wirkstoffgehalt zum Teil davon ab, ob die wirksame Verbindung flüssig oder fest vorliegt und welche Granulierhilfsmittel, Füllstoffe usw. verwendet werden.

Daneben erhalten die genannten Wirkstofformulierungen gegebenenfalls die jeweils üblichen Haft-, Netz-, Dispergier-Emulgier-, Pentrations-, Lösungsmittel, Füll- oder Trägerstoffe.

Zur Anwendung werden die in handelsüblicher Form vorliegenden Konzentrate gegebenenfalls in üblicher Weise verdünnt, z. B. bei Spritzpulvern, emulgierbaren Konzentraten, Dispersionen und teilweise auch bei Mikrogranulaten mittels Wasser. Staubförmige und granulierte Zubereitungen sowie versprühbare Lösungen werden vor der Anwendung üblicherweise nicht mehr mit weiteren inerten Stoffen verdünnt.

Auch Mischungen oder Mischformulierungen mit anderen Wirkstoffen, wie z. B. Insektiziden, Akariziden, Herbiziden, Düngemittel, Wachstumsregulatoren oder Fungiziden sind gegebenenfalls möglich. Insbesondere bei Mischungen mit Fungiziden können teilweise auch synergistische Wirkungssteigerungen erzielt werden.

Die Anwendungskonzentrationen können je nach Verwendungszweck und Anwendungszeitpunkt innerhalb weiter Grenzen variieren. Für die Verwendung als Herbizide kommen Konzentrationen zwischen 0,3 und 10, vorzugsweise 0,5 - 3 kg/ha in Betracht. Bei Verwendung als Wachstumsregulatoren sind die Anwendungskonzentrationen naturgemäß niedriger und liegen bei ca. 0,1 - 2 kg/ha, wobei je nach Pflanzenart die erforderliche Konzentration stark schwanken kann.

Die Erfindung wird durch die nachfolgenden Beispiele erläutert:

**Beispiel 1**

2-Dimethylphosphinoyl-2-hydroxyessigsäurephenacylester

6,38 g (0,1 mol) Kaliumfluorid, 9,95 g (0,06 mol) α-Bromacetophenon und 7,6 g (0,05 mol) 2-Dimethylphosphinoyl-2-hydroxyessigsäure werden in 250 ml Dimethylformamid gelöst und 4 h bei 65°C gerührt, DMF wird abdestilliert und der Rückstand wird mit $CH_2Cl_2$ ausgerührt. Ausbeute 8,5 g (63 %), Fp. 147°C.

In analoger Weise erhält man die folgenden Verbindungen:

**Tabelle 1**

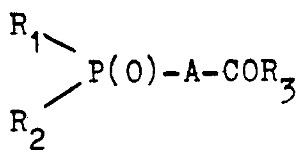

| Bsp. Nr. | $R_1$ | $R_2$ | A | $R_2$ | Fp. [°C] |
|---|---|---|---|---|---|
| 2 | $CH_3$ | $CH_3$ | CHOH | $-OCH_2C_6H_4NO_2$(p) | 121 |
| 3 | " | " | " | $-OCH_2C_6H_4NO_2$(o) | |
| 3 | " | " | " | $-OCH_2C_6H_4NO_2$(m) | |
| 5 | " | " | " | $-OCH_2COC_6H_4Br$(p) | 163 |
| 6 | " | " | " | $-OCH_2COC_6H_4Br$(o) | |
| 7 | " | " | " | $-OCH_2COC_6H_4Br$(m) | |
| 8 | " | " | " | $-OCH_2COOH$ | Öl |
| 9 | " | " | " | $-OCH_2-COOCH_3$ | 115 |
| 10 | " | " | " | $-OCH_2-COOC_2H_5$ | 107 |
| 11 | " | " | " | $-OCH_2-COOC_3H_7$(n) | 82 |
| 12 | " | " | " | $-OCH_2-COOC_6H_{13}$(n) | 65-7 |
| 13 | " | " | " | $-OCH_2-COOC_7H_{15}$(n) | 72 |
| 14 | " | " | " | $-OCH_2-COOC_{10}H_{21}$(n) | 76-8 |
| 15 | " | " | " | $-OCH_2-COOC_{12}H_{25}$(n) | 88-90 |
| 16 | " | " | " | $-OCH_2-COOC_{18}H_{37}$(n) | 98-100 |
| 17 | " | " | " | $-OCH_2-COOC_{18}H_{35}$(n) (Oleyl) | Öl |
| 18 | " | " | " | $-OCH_2-COOCH_2-CH(CH_3)-C_2H_5$ | Öl |
| 19 | " | " | " | $-OCH_2-COOC_4H_9$(tert.) | 118 |
| 20 | " | " | " | $-OCH_2$-COO-Cyclohexyl | Öl |
| 21 | " | " | " | $-OCH_2-COOC_6H_{10}CH_3$(o) | 130-4 |
| 22 | " | " | " | $-OCH_2$-COO-Cyclopropyl | Öl |

| | | | | | |
|---|---|---|---|---|---|
| 23 | $CH_3$ | $CH_3$ | CHOH | $-OCH_2-COO-CH_2C\equiv CH$ | Öl |
| 24 | " | " | " | $-OCH_2-COOCH_2CH_2Br$ | Öl |
| 25 | " | " | " | $-OCH_2COOCH_2CH_2CH_2Br$ | Öl |
| 26 | " | " | " | 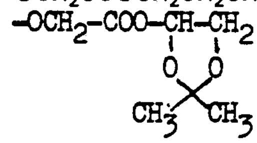 | Öl |
| 27 | " | " | " | 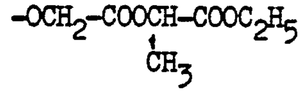 | Öl |
| 28 | " | " | " | 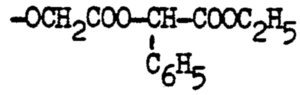 | Öl |
| 29 | " | " | " | 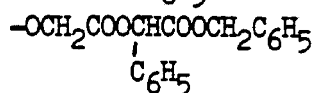 | Öl |
| 30 | " | " | " | $-OCH_2-COOCH_2C_6H_5$ | 95 |
| 31 | " | " | " | $-OCH_2-COOCH_2C_6H_4CF_3$(p) | |
| 32 | " | " | " | $-OCH_2-COOCH_2C_6H_4CF_3$(o) | |
| 33 | " | " | " | $-OCH_2-COOCH_2C_6H_4CF_4$(m) | |
| 34 | " | " | " | $-OCH_2-COOCH_2C_6H_4NO_2$(p) | 147 |
| 35 | " | " | " | $-OCH_2-COOCH_2C_6H_4NO_2$(o) | |
| 36 | " | " | " | $-OCH_2-COOCH_2C_6H_4NO_2$(m) | |
| 37 | " | " | " | $-OCH_2-COOCH_2C_6H_3Cl_2$(o,p) | Öl |
| 38 | " | " | " | $-OCH_2-COOCH_2C_6H_4OC_6H_5$(m) | 133 |
| 39 | " | " | " | $-OCR_2COSC_2H_5$ | 83-6 |
| 40 | " | " | " | $-OCH_2COSC_4H_9$(n) | |
| 41 | " | " | " | $-OCH_2COSC_{10}H_{21}$(n) | |
| 42 | " | " | " | $-OCH_2COSCH_2CH=CH_2$ | |
| 43 | " | " | " | $-OCH_2COSCH_2C_6H_5$ | Öl |
| 44 | " | " | " | $-OCH_2COSC_6H_5$ | Öl |
| 45 | " | " | " | $-OCH_2CONH_2$ | |
| 46 | " | " | " | $-OCH_2CONHC_2H_5$ | |
| 47 | " | " | " | $-OCH_2CONHCH_2C_6H_5$ | Öl |
| 48 | " | " | " | $-OCH_2CONHC_6H_5$ | Öl |
| 49 | " | " | " | $-OCH_2CONHC_8H_{17}$(n) | |
| 50 | " | " | " | $-OC_2H_4COC_2H_5$ | |
| 51 | $CF_3$ | " | " | " | |
| 52 | $C_2H_5$ | " | " | " | |
| 53 | $CH_3$ | " | " | $-OC_2H_4COC_4H_9$(n) | |
| 53 | $C_2H_5$ | " | " | $-OCH_2CONH2$ | |
| 54 | $CH_3$ | " | " | " | |
| 56 | " | " | $CH-OCOC_6H_5$ | $-OCH_2CONHC_4H_9$(n) | |
| 57 | " | " | " | " | |
| 58 | $CH_3$ | $CH_3$ | $CHOCOCH_2C_6H_5$ | $-OCH_2CONHOH$ | |
| 59 | " | " | " | " | |
| 60 | " | " | " | $-OCH_2CONH-NH_2$ | |
| 61 | " | " | CHOH | " | |
| 62 | " | " | " | 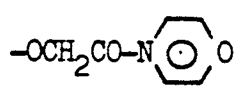 | |
| 63 | " | " | " | " | |
| 64 | " | " | $CHNHC_2H_5$ | " | |
| 65 | " | " | $CHNHC_2H_5$ | $-OCH_2COOCH_3$ | |
| 66 | " | " | " | $-OCH_2COOCH_2C_6H_5$ | |
| 67 | " | " | $CHOCH_3$ | $-OCH_2COCCH_3$ | |
| 68 | $C_2H_5$ | " | " | " | |
| 69 | " | " | " | " | |
| 70 | " | " | $CHOC_2H_5$ | " | |
| 71 | " | " | " | " | |
| 72 | " | " | $CHOCH_2C_6H_5$ | " | |
| 73 | $CF_3$ | " | " | " | |
| 74 | $CH_3$ | " | $CHOC_6H_4Cl$(o) | " | |
| 75 | " | " | " | " | |

| | | | | |
|---|---|---|---|---|
| 76 | " | " | $CHOCON(CH_3)_2$ | $-OCH(CH_3)COOCH_3$ |
| 77 | $C_2H_5$ | " | " | " |
| 78 | $C_4H_9(n)$ | " | " | " |
| 79 | $CF_3$ | " | " | " |
| 80 | OH | " | " | " |
| 81 | $CH_3$ | " | $CHOCONHC_6H_5$ | $-OCH(CH_3)COOC_2H_5$ |
| 82 | $C_2H_5$ | " | " | " |
| 83 | $C_4H_9(n)$ | " | " | " |
| 84 | $CH_3$ | " | $CHOCOC_6H_5$ | $-OC(CH_3)_2COOCH_3$ |
| 85 | $CF_3$ | " | " | $-OCH(CH_3)COOC_2H_5$ |
| 86 | OH | $CH_3$ | $CHOCOC_6H_5$ | $-OCH(CH_3)COOC_2H_5$ |
| 87 | $C_4H_9(n)$ | $C_4H_9(n)$ | " | " |
| 88 | $CH_3$ | $CH_3$ | $CHOCOCH_2CH=CH_2$ | $-OCH_2-COOC_2H_5$ |
| 89 | $CF_3$ | " | " | $SCH_2-COOCH_3$ |
| 90 | $C_4H_9(n)$ | $C_4H_9(n)$ | " | " |
| 91 | $C_2H_5$ | $CH_3$ | " | " |
| 92 | $CH_2-CH_2-CN$ | " | $CHOCON(CH_3)_2$ | $-OCH(CH_3)COOCH_3$ |
| 93 | " | " | $CHOCOC_6H_5$ | $-OCH(CH_3)COOC_2H_5$ |
| 94 | " | " | $CHOCOCH_2-CH=CH_2$ | $-OCH(CH_3)COOC_4H_9(n)$ |
| 95 | " | " | $CHOCONHC_6H_5$ | $-OCH(CH_3)COOC_2H_5$ |
| 96 | " | " | " | $-OCH(CH_3)COOC_6H_4NO_2(m)$ |
| 97 | $C_2H_5$ | " | $CHOCOC_6H_5$ | " |
| 98 | $CF_3$ | " | " | " |
| 99 | $C_4H_9(n)$ | " | " | " |
| 100 | $CH_3$ | " | $CHOCON(CH_3)_2$ | " |
| 101 | $C_3H_7(i)$ | " | " | " |
| 102 | " | $C_3H_7(i)$ | " | " |
| 103 | $CH_3$ | $CH_3$ | $CHOCOC_6H_5$ | OH |
| 104 | " | " | " | SH |
| 105 | " | " | " | $OCH_3$ |
| 106 | " | " | " | $OC_2H_5$ |
| 107 | " | " | " | $OCH_2-C_6H_5$ |
| 108 | " | " | " | $SCH_2-C_6H_5$ |
| 109 | " | " | " | $OC_6H_4OC_6H_5(p)$ |
| 110 | " | " | " | $OC_6H_4OC_6H_5(m)$ |
| 111 | " | " | " | $N(C_2H_5)_2$ |
| 112 | " | " | " | $NH_2$ |
| 113 | " | " | " | $NHC_2H_5$ |
| 114 | " | " | CHOH | $-OCH_2COOCH_2COOC_2H_5$ |
| 115 | " | " | " | $-OCH_2COOC_2H_4-COOCH_3$ |
| 116 | " | " | " | $-OCH_2-COOCH_2C_6H_4-COOCH_2C_6H_5(p)$ |
| 117 | " | " | " | $-OCH_2COOCH_2C_6H_4COOC_2H_5(p)$ |
| 118 | " | " | " | $-O-CH_2COOCH_2-COOC_4H_9(n)$ |

B) Formulierungsbeispiele

a) Ein Stäubemittel wird erhalten, indem man 10 Gewichtsteile Wirkstoff und 90 Gewichtsteile Talkum oder Inertstoff mischt und in einer Schlagmühle zerkleinert.

b) Ein in Wasser leicht dispergierbares, benetzbares Pulver wird erhalten, indem man 25 Gewichtsteile Wirkstoff, 64 Gewichtsteile kaolinhaltigen Quarz als Inertstoff, 10 Gewichtsteile ligninsulfonsaures Kalium und 1 Gewichtsteil oleoylmethyltaurinsaures Natrium als Netzund Dispergiermittel mischt und in einer Stiftmühle mahlt.

c) Ein in Wasser leicht dispergierbares Dispersionskonzentrat wird erhalten, indem man 20 Gewichtsteile Wirkstoff mit 6 Gewichtsteilen Alkylphenolpolyglykolether (Triton X 207), 3 Gewichtsteilen Isotridecanolpolyglykolether (8 AeO) und 71 Gewichtsteilen paraffinischem Mineralöl (Siedebereich z. B. ca. 255 bis über 377° C) mischt und in einer Reibkugelmühle auf eine Feinheit von unter 5 Mikron vermahlt.

d) Ein emulgierbares Konzentrat wird erhalten aus 15 Gewichtsteilen Wirkstoff, 75 Gewichtsteilen Cyclohexanon als Lösungsmittel und 10 Gewichtsteilen oxethyliertes Nonylphenol (10 AeO) als Emulgator.

C) Biologische Beispiele

**Beispiel 1**

Samen bzw. Rhizomstücke von Ungräsern und Unkräutern wurden in sandiger Lehmerde in Plastiktöpfen (Ø 9 cm) ausgesät und unter guten Wachstumsbedingungen im Gewächshaus 3 - 5 Wochen angezogen.

Anschließend wurden die als Spritzpulver oder wäßrige Lösungen formulierten erfindungsgemäßen Verbindungen in Form von wäßrigen Suspensionen bzw. versprühbaren Lösungen auf die oberirdischen Pflanzenteile gesprüht. Die verwendete Wassermenge entsprach dabei 600 - 800 l/ha.

Nach ca. 3 Wochen Standzeit im Gewächshaus unter optimalen Wachstumsbedingungen wurde die herbizide Wirkung visuell bonitiert.

In Tabelle 2 sind die Ergebnisse der Versuche mit den neuen erfindungsgemäßen Verbindungen zusammengestellt. Folgender Schlüssel wurde dabei benutzt:

0 = keine Wirkung
1 = 0 - 20 % Wirkung
2 = 20 - 40 % Wirkung
3 = 40 - 60 % Wirkung
4 = 60 - 80 % Wirkung
5 = 80 - 100 % Wirkung

Die in Tabelle 2 dargestellten Werte belegen klar die sehr gute herbizide Wirksamkeit der neuen Verbindungen gegen ein breites Spektrum wirtschaftlich wichtiger Schadpflanzen.

**Abkürzungen zu Tabelle 2**

SIA = Sinapis arvensis
CRS = Crysanthemum segctum
ECG = Echinochloa crus galli
LOM = Lolium multiflorum
ai = Aktivsubstanz.

**Tabelle 2:** Herbizide Wirkung der erfindungsgemäßen Verbindungen im Nachauflauf

| Beispiel Nr. | Dosis kg a.i./ha | herbizide Wirkung SIA | CRS | ECG | LOM |
|---|---|---|---|---|---|
| 1 | 2,5 | 5 | 5 | 4 | 5 |
| 2 | 2,5 | 5 | 5 | 4 | 5 |
| 5 | 2,5 | 5 | 4 | 5 | 5 |
| 8 | 2,5 | 5 | 5 | 5 | 5 |
| 9 | 2,5 | 5 | 4 | 5 | 5 |
| 10 | 2,5 | 5 | 4 | 4 | 5 |
| 11 | 2,5 | 5 | 5 | 5 | 5 |
| 12 | 2,5 | 5 | 5 | 5 | 5 |
| 14 | 2,5 | 5 | 5 | 5 | 5 |
| 15 | 2,5 | 5 | 3 | 3 | 4 |
| 16 | 2,5 | 5 | 4 | 4 | 5 |
| 17 | 2,5 | 5 | 3 | 2 | 4 |
| 18 | 2,5 | 5 | 5 | 5 | 5 |
| 19 | 2,5 | 5 | 5 | 4 | 5 |
| 20 | 2,5 | 4 | 1 | 1 | 1 |
| 21 | 2,5 | 5 | 4 | 4 | 5 |
| 22 | 2,5 | 3 | 1 | 1 | 1 |
| 23 | 2,5 | 5 | 5 | 4 | 5 |
| 24 | 2,5 | 5 | 4 | 4 | 5 |
| 25 | 2,5 | 5 | 4 | 5 | 5 |
| 26 | 2,5 | 4 | 1 | 1 | 1 |
| 27 | 2,5 | 5 | 5 | 5 | 5 |
| 28 | 2,5 | 5 | 4 | 4 | 5 |
| 29 | 2,5 | 5 | 4 | 3 | 3 |
| 30 | 2,5 | 5 | 5 | 5 | 5 |
| 31 | 2,5 | 4 | 4 | 4 | 5 |
| 34 | 2,5 | 5 | 4 | 2 | 3 |
| 37 | 2,5 | 5 | 1 | 1 | 1 |
| 38 | 2,5 | 5 | 3 | 2 | 2 |
| 39 | 2,5 | 5 | 4 | 5 | 5 |
| 43 | 2,5 | 4 | 4 | 4 | 4 |
| 47 | 2,5 | 5 | 5 | 5 | 5 |
| 48 | 2,5 | 5 | 4 | 4 | 5 |

**Patentansprüche**

1. Verbindungen der allgemeinen Formel I

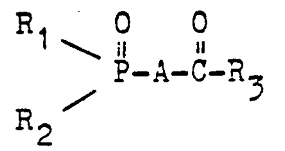

I

worin

$R_1$ und $R_2$ unabhängig voneinander ($C_4$-$C_4$)-Alkyl, OH, $CF_3$ oder Cyanethyl

A die Gruppen -CO-, -CHOH, -$CHOR_6$, -$CHOCONR_7R_8$, -$CHNHR_6$, oder -$CHOCOR_{10}$,

$R_3$- $XCR_{11}R_{12}CXR_{13}$, -X($C_{13}$-$C_{18}$)-Alkyl, -X($C_1$-$C_{17}$)-Alkylcarbonyl-($C_1$-$C_{17}$)-alkyl, Nitrobenzyloxy, einen Rest der Formel

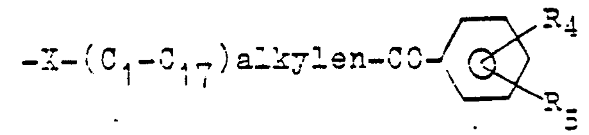

;

sowie, falls A = -$CHOCOR_{10}$ auch -OH, -SH;

($C_{1-12}$)-Alkoxy, ($C_3$-$C_8$)-Cycloalkoxy, ($C_3$-$C_6$)-Alkenyloxy, ($C_3$-$C_6$)-Alkinyloxy, Phenoxy oder Benzyloxy, wobei die genannten Gruppen ihrerseits durch OH, Halogen, $CF_3$, ($C_1$-$C_4$)-Alkyl oder ($C_1$-$C_4$)-Alkoxy substituiert sein können;

($C_1$-$C_6$)-Alkylthio, ($C_3$-$C_8$)-Cycloalkylthio, ($C_3$-$C_6$)-Alkenylthio, ($C_3$-$C_6$)-Alkinylthio, Phenylthio oder Benzylthio, wobei die genannten Gruppen ihrerseits durch Halogen, $CF_3$, ($C_1$-$C_4$)-Alkyl oder ($C_1$-$C_4$)-Alkoxy substituiert sein können;

Amino, Hydroxylamino;

($C_1$-$C_4$)-Alkylamino, O-($C_1$-$C_4$)-Alkylhydroxylamino, Di-($C_1$-$C_4$)-alkylamino, Anilino, Phenyl-($C_1$-$C_4$)-alkylamino, Diphenyl-($C_1$-$C_4$)-alkylamino, N-Phenyl-N-($C_1$-$C_4$)-alkylamino, N-Phenyl-N-($C_3$-$C_6$)-alkenylamino oder N-Phenyl-N-($C_3$-$C_6$)-alkinylamino, wobei die genannten Gruppen ihrerseits durch OH, Halogen, ($C_1$-$C_4$)-Alkyl oder ($C_1$-$C_4$)-Alkoxy substituiert sein können;

Hydrazino, β-($C_1$-$C_4$)-Alkylhydrazino, β,β-Di-($C_1$-$C_4$)-alkylhydrazino, Piperidino, Pyrrolidino, Morpholino, 2,6-Dimethylmorpholino oder einen Rest der Formel

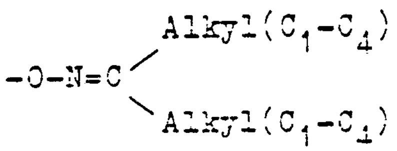

oder

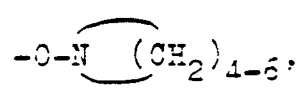

,

$R_4$ H, OH, SH, Halogen, ($C_1$-$C_4$)-Alkyl, ($C_1$-$C_4$)-Alkoxy, Allyloxy, Propargyloxy, Phenoxy, Benzyloxy, Formyl, $CF_3$, $NO_2$, Di-($C_1$-$C_4$)-alkoxymethyl, Di-($C_1$-$C_4$)-alkylthiomethyl oder ($C_1$-$C_4$)-Alkoxycarbonyl,

$R_5$ H, Halogen, ($C_1$-$C_4$)-Alkoxy oder $NO_2$,

$R_6$ ($C_1$-$C_{12}$)-Alkyl, Benzyl, Phenyl, Halogenbenzyl, Halogenphenyl, Allyl, Propargyl, $CF_3$ oder Tetrahydropyranyl;

$R_7$, $R_8$ unabhängig voneinander H; ($C_1$-$C_{12}$)-Alkyl, ($C_3$-$C_8$)-Cycloalkyl, ($C_3$-$C_6$)-Alkenyl, ($C_3$-$C_6$)-Alkinyl, Phenyl, Benzyl, Benzoyl, Phenoxysulfonyl, ($C_1$-$C_{12}$)-Alkylsulfonyl, ($C_3$-$C_6$)-Alkenylsulfonyl oder Phenylsulfonyl, wobei die genannten Gruppen ihrerseits durch Halogen, $CF_3$, CN, ($C_1$-$C_4$)-Alkoxy oder ($C_1$-$C_4$)-Alkoxycarbonyl substituiert sein können,

$R_9$ ($C_1$-$C_6$)-Alkyl, ($C_3$-$C_6$)-Alkenyl, ($C_3$-$C_6$)-Alkinyl, ($C_1$-$C_4$)-Acyl, Halogen-($C_1$-$C_4$)-acyl oder Benzoyl,

$R_{10}$ ($C_1$-$C_{18}$)-Alkyl, ($C_3$-$C_6$)-Cycloalkyl, Allyl, Proprgyl, Phenyl, Benzyl, Mono- oder Dihalogenbenzyl,

$R_{11}$, $R_{12}$ unabhängig voneinander H, ($C_1$-$C_4$)-Alkyl, ($C_1$-$C_4$)-Alkoxy, Phenyl oder Benzyl,

$R_{13}$ OH, SH;

($C_1$-$C_{18}$)-Alkoxy, ($C_3$-$C_8$)-Cycloalkoxy, ($C_3$-$C_{18}$)-Alkenyloxy, ($C_3$-$C_6$)-Alkinyloxy, Phenoxy oder Benzyloxy, wobei die genannten Gruppen ihrerseits durch OH, Halogen, $CF_3$, $NO_2$, ($C_1$-$C_4$)-Alkyl, ($C_1$-$C_4$)-Alkoxy oder Phenyloxy substituiert sein können;

($C_1$-$C_4$)-Alkoxycarbonyl-($C_1$-$C_4$)-alkoxy, ($C_1$-$C_4$)-Alkoxycarbonyl-benzyloxy, Benzyloxycarbonyl-benzyloxy;

Methylthio-($C_1$-$C_4$)-alkyl, Methylsulfinyl-($C_1$-$C_4$)-alkyl, Methylsulfonyl-($C_1$-$C_4$)-alkyl; ($C_1$-$C_{18}$)-Alkylthio, ($C_3$-$C_8$)-Cycloalkylthio, ($C_3$-$C_{18}$)-Alkenylthio, ($C_3$-$C_6$)-Alkinylthio, Phenylthio oder Benzylthio, wobei die genannten Gruppen ihrerseits durch Halogen, $CF_3$, ($C_1$-$C_4$)-Alkyl oder ($C_1$-$C_4$)-Alkoxy substituiert sein können;

Amino, Hydroxylamino;

($C_1$-$C_4$)-Alkylamino, O-($C_1$-$C_4$)-Alkylhydroxylamino, Di-($C_1$-$C_{10}$)-Alkylamino, Anilino, Phenyl-($C_1$-$C_4$)-alkylamino, Diphenyl-($C_1$-$C_4$)-alkyamino, N-Phenyl-N-($C_1$-$C_4$)-alkylamino, N-Phenyl-N-($C_3$-$C_6$)-alkenylamino-oder N-Phenyl-N-($C_3$-$C_6$)-alkinylamino, wobei die genannten Gruppen ihrerseits durch, OH, Halogen, ($C_1$-$C_4$)-Alkyl oder ($C_1$-$C_4$)-Alkoxy substituiert sein können;

Hydrazino, β-($C_1$-$C_4$)-Alkyl-hydrazino, β,β-Di-($C_1$-$C_4$)-alkylhydrazino, Piperidino, Pyrrolidino, Morpholino, 2,6-Dimethylmorpholino oder einen Rest der Formel

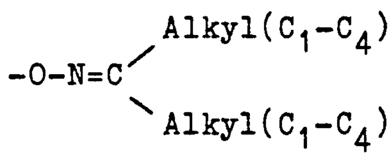

sowie
X O oder S bedeuten
sowie deren Salze mit Basen oder Säuren.

2. Verbindungen der Formel I gemäß Anspruch 1, worin $R_1$ und $R_2$ $CH_3$ oder $C_2H_5$, A = CHOH, $R_3$ die Reste $-OCH_2COR_{13}$ oder Nitrobenzyloxy bedeuten und $R_{13}$ die in Anspruch 1 angegebenen Bedeutungen hat.

3. Verbindungen gemäß Anspruch 2, worin $R_1$ und $R_2$ Methyl,
A CHOH und $R_{13}$ ($C_1$-$C_{18}$)-Alkoxy, Allyloxy, Propinyloxy, ($C_1$-$C_4$)Halogenalkoxy, ($C_1$-$C_4$)-Alkoxycarbonyl-($C_1$-$C_4$)-alkoxy, Benzyloxy, ($C_1$-$C_4$)-Alkoxycarbonyl-benzyloxy, Benzyloxycarbonyl-benzyloxy, ($C_1$-$C_4$)-Alkylthio, ($C_1$-$C_4$)-Alkylamino, Anilino oder Benzylamino bedeuten.

4. Herbizide und wachstumsregulierende Mittel, gekennzeichnet durch einen Gehalt an einer Verbindung gemäß Anspruch 1, 2 oder 3.

5. Verfahren zur Bekämpfung unerwünschten Pflanzenwuchses, dadurch gekennzeichnet, daß man auf die Pflanzen bzw. die zu behandelnden Flächen eine wirksame Menge einer Verbindung gemäß Anspruch 1, 2 oder 3 aufbringt.

6. Verfahren zur Wachstumsregulierung bei Nutzpflanzen, dadurch gekennzeichnet, daß man auf die Pflanzen eine wirksame Menge einer Verbindung gemäß Anspruch 1, 2 oder 3 aufbringt.

## Claims

1. Compounds of the formula I

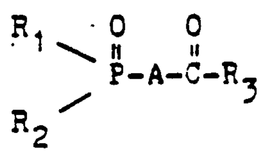

in which
$R_1$ and $R_2$ independently of one another denote ($C_1$-$C_4$)-alkyl, OH, $CF_3$ or cyanoethyl,
A denotes the groups -CO-, -CHOH-, $-CHOR_6$, $-CHOCOHR_7R_8$, $-CHNHR_9$ or $-CHOCOR_{10}$,
$R_3$ denotes $XCR_{11}R_{12}CXR_{13}$, -X($C_{13}$-$C_{18}$)-alkyl, -X($C_1$-$C_{17}$)-alkylcarbonyl-($C_1$-$C_{17}$)-alkyl, nitrobenzyloxy, a radical of the formula

-X-($C_1$-$C_{17}$)-alkylene-CO- 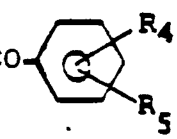

and, if A = $-CHOCOR_{10}$, also -OH or -SH; or ($C_1$-$C_{12}$)-alkoxy, ($C_3$-$C_8$)-cycloalkoxy, ($C_3$-$C_6$)-alkenyloxy, ($C_3$-$C_6$)-alkinyloxy, phenoxy or benzyloxy, it being possible for the groups mentioned to be substituted in turn by OH, halogen, $CF_3$, ($C_1$-$C_4$)-alkyl or ($C_1$-$C_4$)-alkoxy; or ($C_1$-$C_6$)-alkylthio, ($C_3$-$C_8$)-cycloalkylthio, ($C_3$-$C_6$)-alkenylthio, ($C_3$-$C_6$)-alkinylthio, phenylthio or benzylthio, it being possible for the groups mentioned to be substituted in turn by halogen, $CF_3$, ($C_1$-$C_4$)-alkyl or ($C_1$-$C_4$)-alkoxy; or amino or hydroxylamino; or ($C_1$-$C_4$)-alkylamino, O-($C_1$-$C_4$)-alkylhydroxylamino, di-($C_1$-$C_4$)-alkylamino, anilino, phenyl-($C_1$-$C_4$)-alkylamino, diphenyl-($C_1$-$C_4$)-alkylamino, N-phenyl-N-($C_1$-$C_4$)-alkylamino, N-phenyl-N-($C_3$-$C_6$)-alkenylamino or N-phenyl-N-($C_3$-$C_6$)-alkinylamino, it being possible for the groups mentioned to be substituted in turn by OH, halogen, ($C_1$-$C_4$)-alkyl or ($C_1$-$C_4$)-alkoxy; or hydrazino, β-($C_1$-$C_4$)-alkylhydrazino, β,β-di-($C_1$-$C_4$)-alkylhydrazino, piperidino, pyrrolidino, morpholino, 2,6-dimethylmorpholino or a radical of the formula

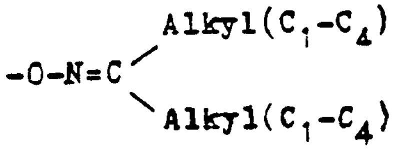 or 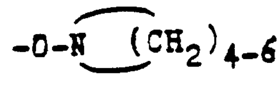

$R_4$ denotes H, OH, SH, halogen, ($C_1$-$C_4$)-alkyl, ($C_1$-$C_4$)-alkoxy, allyloxy, propargyloxy, phenoxy, benzyloxy, formyl, $CF_3$, $NO_2$, di-($C_1$-$C_4$)-alkoxymethyl, di-($C_1$-$C_4$)-alkylthiomethyl or ($C_1$-$C_4$)-alkoxycarbonyl,

$R_5$ denotes H, halogen, ($C_1$-$C_4$)-alkoxy or $NO_2$,

$R_6$ denotes ($C_1$-$C_{12}$)-alkyl, benzyl, phenyl, halogenobenzyl, halogenophenyl, allyl, propargyl, $CF_3$ or tetrahydropyranyl,

$R_7$ and $R_8$ indépendently of one another denote H, ($C_1$-$C_{12}$)-alkyl, ($C_3$-$C_8$)-cycloalkyl, ($C_3$-$C_6$)-alkenyl, ($C_3$-$C_6$)-alkinyl, phenyl, benzyl, benzoyl, phenoxysulfonyl, ($C_1$-$C_{12}$)-alkylsulfonyl, ($C_3$-$C_6$)-alkenylsulfonyl or phenylsulfonyl, it being possible for the groups mentioned to be substituted in turn by halogen, $CF_3$, CN, ($C_1$-$C_4$)-alkoxy or ($C_1$-$C_4$)-alkoxycarbonyl,

$R_9$ denotes ($C_1$-$C_6$)-alkyl, ($C_3$-$C_6$)-alkenyl, ($C_3$-$C_6$)-alkinyl, ($C_1$-$C_4$)-acyl, halogen-($C_1$-$C_4$)- acyl or benzoyl,

$R_{10}$ denotes ($C_1$-$C_{18}$)-alkyl, ($C_3$-$C_6$)-cycloalkyl, allyl, propargyl, phenyl, benzyl, monohalogenobenzyl or dihalogenobenzyl,

$R_{11}$ and $R_{12}$ independently of one another denote H, ($C_1$-$C_4$)-alkyl, ($C_1$-$C_4$)-alkoxy, phenyl or benzyl,

$R_{13}$ denotes OH or SH; or ($C_1$-$C_{18}$)-alkoxy, ($C_3$-$C_8$)-cycloalkoxy, ($C_3$-$C_{18}$)-alkenyloxy, ($C_3$-$C_6$)-alkinyloxy, phenoxy or benzyloxy, it being possible for the groups mentioned to be substituted in turn by OH, halogen, $CF_3$, $NO_2$, ($C_1$-$C_4$)-alkyl, ($C_1$-$C_4$)-alkoxy or phenoxy; or ($C_1$-$C_4$)-alkoxycarbonyl-($C_1$-$C_4$)-alkoxy, ($C_1$-$C_4$)-alkoxycarbonylbenzyloxy or benzyloxycarbonylbenzyloxy; or methylthio-($C_1$-$C_4$)-alkyl, methylsulfinyl-($C_1$-$C_4$)-alkyl or methylsulfonyl-($C_1$-$C_4$)-alkyl; or ($C_1$-$C_{18}$)-alkylthio, ($C_3$-$C_8$)-cycloalkylthio, ($C_3$-$C_{18}$)-alkenylthio, ($C_3$-$C_6$)-alkinylthio, phenylthio or benzylthio, it being possible for the groups mentioned to be substituted in turn by halogen, $CF_3$, ($C_1$-$C_4$)-alkyl or ($C_1$-$C_4$)-alkoxy; or amino or hydroxylamino; or ($C_1$-$C_4$)-alkylamino, O-($C_1$-$C_4$)-alkylhydroxylamino, di-($C_1$-$C_{10}$)-alkylamino, anilino, phenyl-($C_1$-$C_4$)-alkylamino, di-phenyl-($C_1$-$C_4$)-alkylamino, N-phenyl-N-($C_1$-$C_4$)-alkylamino, N-phenyl-N-($C_3$-$C_6$)-alkenylamino or N-phenyl-N-($C_3$-$C_6$)-alkinylamino, it being possible for the groups mentioned to be substituted in turn by OH, halogen, ($C_1$-$C_4$)-alkyl or ($C_1$-$C_4$)-alkoxy; or hydrazino, β-($C_1$-$C_4$)-alkylhydrazino, β,β-di-($C_1$-$C_4$)-alkylhydrazino, piperidino, pyrrolidino, morpholino, 2,6-dimethylmorpholino or a radical of the formula

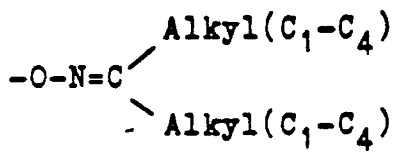 and

X denotes O or S and
salts thereof with bases or acids.

2. A compound of the formula I as claimed in claim 1, in which $R_1$ and $R_2$ denote $CH_3$ or $C_2H_5$, A denotes CHOH, $R_3$ denotes the radicals $-OCH_2COR_{13}$ or nitrobenzyloxy and $R_{13}$ has the meanings indicated in claim 1.

3. A compound as claimed in claim 2, in which $R_1$ and $R_2$ denote methyl, A denotes CHOH and $R_{13}$ denotes ($C_1$-$C_{18}$)-alkoxy, allyloxy, propinyloxy, ($C_1$-$C_4$)-halogenoalkoxy, ($C_1$-$C_4$)-alkoxycarbonyl-($C_1$-$C_4$)-alkoxy, benzyloxy, ($C_1$-$C_4$)-alkoxycarbonylbenzyloxy, benzyloxycarbonylbenzyloxy, ($C_1$-$C_4$)-alkylthio, ($C_1$-$C_4$)-alkylamino, anilino or benzylamino.

4. A herbicidal and growth-regulating agent which contains a compound as claimed in claim 1, 2 or 3.

5. A process for combating undesired plant growth, which comprises applying an effective amount of a compound as claimed in claim 1, 2 or 3 to the plants or to the areas to be treated.

6. A process for regulating the growth of useful plants, which comprises applying an effective amount of a compound as claimed in claim 1, 2 or 3 to the plants.

**Revendications**

1. Composés répondant à la formule générale I:

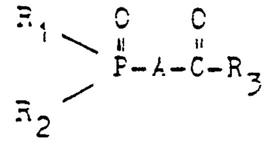 I

dans laquelle:

$R_1$ et $R_2$ représentent chacun, indépendamment l'un de l'autre, un alkyle en $C_1$-$C_4$ ou un radical OH, $CF_3$ ou cyanéthyle,

A représente un radical -CO-, -CH(OH)-, $-CH(OR_6)-$, $-CH(OCONR_7-R_8)-$, $-CH(NHR_9)-$ ou $-CH(OCOR_{10})-$,

$R_3$ représente:

- un radical $-XCR_{11}R_{12}CXR_{13}$, $-(X-(C_{13}-C_{18})$ Alkyle,$-X-(C_1-C_{17})$-alkyl-carbonyl-$(C_1-C_{17})$-alkyle ou nitrobenzoyloxy, un radical de formule:

$-X-(C_1-C_{17})$-alkylène-CO- 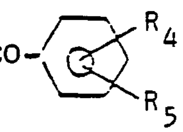

ou encore, dans le cas où A désigne un radical $-CH(OCOR_{10})-$, $R_3$ peut aussi représenter un radical -OH ou -SH;

- un radical alcoxy en $C_1-C_{12}$, cycloalcoxy en $C_3-C_8$, alcényloxy en $C_3-C_6$, alcynyloxy en $C_3-C_6$, phénoxy ou benzyloxy, chacun de ces radicaux pouvant porter de son côté un OH, un halogène, un $CF_3$, un alkyle en $C_1-C_4$ ou un alcoxy en $C_1-C_4$;
- un radical alkylthio en $C_1-C_6$, cycloalkylthio en $C_3-C_8$, alcénylthio en $C_3-C_6$, alcynylthio en $C_3-C_6$, phénylthio ou benzylthio, chacun de ces radicaux pouvant de son côté porter un halogène, un $CF_3$, un alkyle en $C_1-C_4$ ou un alcoxy en $C_1-C_4$;
- un radical amino ou hydroxylamino;
- un radical $(C_1-C_4)$-alkylamino, O-$(C_1-C_4)$-alkyl-hydroxylamino, di-$(C_1-C_4)$-alkylamino, anilino, phényl-$(C_1-C_4)$-alkylamino, diphényl-$(C_1-C_4)$-alkylamino, N-phényl-N-$(C_1-C_4)$-alkylamino, N-phényl-N-$(C_3-C_6)$-alcénylamino ou N-phényl-N-$(C_3-C_6)$-alcynylamino, chacun de ces radicaux pouvant de son côté porter un OH, un halogène, un alkyle en $C_1-C_4$ ou un alcoxy en $C_1-C_4$;
- un radical hydrazino, β-$(C_1-C_4)$-alkyl-hydrazino, β,β-di-$(C_1-C_4)$-alkyl-hydrazino, pipéridino, pyrrolidino, morpholino ou diméthyl-2,6 morpholino ou un radical de formule:

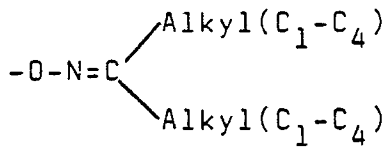 ou 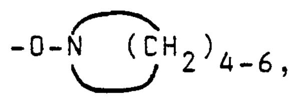 ,

$R_4$ représente H, OH, SH, un halogène, un alkyle en $C_1-C_4$, un alcoxy en $C_1-C_4$, un allyloxy, un propargyloxy, un phénoxy, un benzyloxy, un formyle, $CF_3$, $NO_2$, un di-$(C_1-C_4)$-alcoxy-méthyle, un di-$(C_1-C_4)$-alkylthio-méthyle ou un $(C_1-C_4)$-alcoxy-carbonyle,

$R_5$ représente H, un halogène, un alcoxy en $C_1-C_4$ ou $NO_2$,

$R_6$ représente un alkyle en $C_1-C_{12}$, un benzyle, un phényle, un halogénobenzyle, un halogénophényle, un allyle, un propargyle, $CF_3$ ou un tétrahydropyrannyle,

$R_7$ et $R_8$ représentent chacun, indépendamment l'un de l'autre, H, un alkyle en $C_1-C_{12}$, un cycloalkyle en $C_3-C_8$, un alcényle en $C_3-C_6$, un alcynyle en $C_3-C_6$, un phényle, un benzyle, un benzoyle, un phénoxysulfonyle, un alkylsulfonyle en $C_1-C_{12}$, un alcénylsulfonyle en $C_3-C_6$ ou un phénylsulfonyle, chacun de ces radicaux pouvant de son côté porter un halogène, $CF_3$, CN, un alcoxy en $C_1-C_4$ ou un $(C_1-C_4)$-alcoxy-carbonyle,

$R_9$ représente un alkyle en $C_1-C_6$ un alcényle en $C_3-C_6$, un alcynyle en $C_3-C_6$, un acyle en $C_1-C_4$, un halogénoacyle en $C_1-C_4$ ou un benzoyle,

$R_{10}$ représente un alkyle en $C_1-C_{18}$, un cycloalkyle en $C_3-C_6$, un allyle, un propargyle, un phényle, un benzyle, un monohalogénobenzyle ou un dihalogénobenzyle,

$R_{11}$ et $R_{12}$ représentent chacun, indépendamment l'un de l'autre, H, un alkyle en $C_1-C_4$, un alcoxy en $C_1-C_4$, un phényle ou un benzyle,

$R_{13}$ représente:

- un radical OH ou SH;
- un alcoxy en $C_1-C_{18}$, un cycloalcoxy en $C_3-C_8$, un alcényloxy en $C_3-C_{18}$, un alcynyloxy en $C_3-C_6$, un phénoxy ou un benzyloxy, chacun de ces radicaux pouvant de son côté porter un OH, un halogène, $CF_3$, $NO_2$, un alkyle en $C_1-C_4$, un alcoxy en $C_1-C_4$ ou un phénoxy;
- un radical $(C_1-C_4)$-alcoxy-carbonyl-$(C_1-C_4)$-alcoxy, $(C_1-C_4)$-alcoxy-carbonyl-benzyloxy, benzyloxycarbonylbenzyloxy; méthylthio-$(C_1-C_4)$-alkyle, méthylsulfinyl-$(C_1-C_4)$-alkyle, méthylsulfonyl-$(C_1-C_4)$-alkyle; $(C_1-C_{18})$-alkylthio, $(C_3-C_8)$-cycloalkylthio, $(C_3-C_{18})$-alcénylthio, $(C_3-C_6)$-alcynylthio, phénylthio ou benzylthio, chacun de ces radicaux pouvant de son côté porter un halogène, $CF_3$, un alkyle en $C_1-C_4$ ou un alcoxy en $C_1-C_4$;
- un radical amino ou hydroxylamino;
- un radical $(C_1-C_4)$-alkylamino, O-$(C_1-C_4)$-alkyl-hydroxylamino, di-$(C_1-C_{10})$-alkylamino, anilino, phényl-$(C_1-C_4)$-alkylamino, bis-[phényl-$(C_1-C_4)$-alkyl]-amino, N-phényl-N-$(C_1-C_4)$-alkyl-amino, N-phényl-N-$(C_3-C_6)$-alcényl-amino ou N-phényl-N-$(C_3-C_6)$-alcynylamino, chacun de ces radicaux pouvant de son côté porter un OH, un halogène, un alkyle en $C_1-C_4$ ou un alcoxy en $C_1-C_4$;
- un radical hydrazino, β-$(C_1-C_4)$-alkyl-hydrazino, β,β-di-$(C_1-C_4)$-alkyl-hydrazino, pipéridino, pyrrolidino, morpholino ou diméthyl-2,6 morpholino ou un radical de formule :

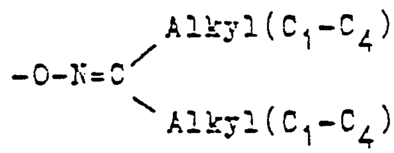

et

X représente O ou S,

ainsi que les sels qu'ils forment avec des bases ou des acides.

2. Composés de formule I selon la revendication 1 dans lesquels $R_1$ et $R_2$ représentent chacun un radical $-CH_3$ ou $-C_2H_5$, A représente un radical -CHOH, $R_3$ représente un radical $-OCH_2COR_{13}$ ou un radical nitrobenzyloxy, et $R_{13}$ a les significations qui lui ont été données à la revendication 1.

3. Composés selon la revendication 2 dans lesquels $R_1$ et $R_2$ représentent chacun un méthyle, A représente -CHOH et $R_{13}$ représente un alcoxy en $C_1$-$C_{18}$, un allyloxy, un propynyloxy, un halogénoalcoxy en $C_1$-$C_4$, un ($C_1$-$C_4$)-alcoxy-carbonyl-($C_1$-$C_4$)-alcoxy, un benzyloxy, un ($C_1$-$C_4$)-alcoxy-carbonyl-benzyloxy, un benzyloxycarbonylbenzyloxy, un alkylthio en $C_1$-$C_4$, un alkylamino en $C_1$-$C_4$, un anilino ou un benzylamino.

4. Produits herbicides et régulateurs de croissance caractérisés en ce qu'ils contiennent un composé selon l'une quelconque des revendications 1, 2 et 3.

5. Procédé pour combattre le développement de plantes indésirables, procédé caractérisé en ce qu'on applique sur les plantes ou sur les surfaces à traiter une quantité efficace d'un composé selon l'une quelconque des revendications 1, 2 et 3.

6. Procédé pour régler la croissance de plantes utiles, procédé caractérisé en ce qu'on applique sur les plantes une quantité efficace d'un composé selon l'une quelconque des revendications 1, 2 et 3.